# FASCICULE DE BREVET EUROPEEN

(11) **EP 1 041 225 B1**
(45) Date de publication et mention de la délivrance du brevet: **14.01.2004**
(21) Numéro de dépôt: 00400759.7
(22) Date de dépôt: 20.03.2000
(51) Int. Cl.: E05B 49/00, G07C 9/00, B60R 25/00

(54) **Système pour sécuriser une transmission bidirectionnelle de données entre un identifiant et un identifieur**
System zum Sichern einer bidirektionalen Datenübertragung zwischen einem zu identifizierenden Objekt und einem Identifizierer
System for securing a bidirectional data transmission between an identifying object and an identifier

(30) Priorité: 29.03.1999 FR 9903867
(43) Date de publication de la demande: 04.10.2000
(73) Titulaire: VALEO SECURITE HABITACLE S.A.S., 94042 Créteil Cédex (FR)
(72) Inventeur: Avenel, Jean-Jacques, 94430 Chennevieres (FR)
(74) Mandataire: Hervouet, Sylvie

(56) Documents cités:
- DE-C- 4 409 167
- US-A- 4 656 472
- US-A- 4 764 980

## Description

L'invention est relative à un système pour sécuriser une transmission bidirectionnelle de données entre un identifiant et un identifieur.

Un système de ce genre comprend généralement un dispositif identifieur ou d'identification ayant un circuit d'émission et un circuit de réception, installé dans l'espace clos, et un identifiant porté par un utilisateur qui souhaite obtenir l'accès, un échange de données entre dispositif d'identification et identifiant étant prévu pour s'établir normalement lorsque la distance entre l'identifiant et le dispositif d'identification est inférieure à une limite prédéterminée, l'accès n'étant autorisé que lorsque le dispositif d'identification a authentifié l'identifiant (à comparer avec DE- C-44 09 167).

L'invention concerne plus particulièrement, parce que c'est dans ce cas que son application semble devoir présenter le plus d'intérêt, mais non exclusivement, un système pour sécuriser l'accès à un véhicule automobile dont les ouvrants, en particulier les portières de l'habitacle, comportent des serrures commandées par le système d'accès.

Dans ce type de système, l'utilisateur, pour obtenir l'accès, doit tout d'abord faire débuter une opération d'identification. Ce démarrage de l'opération peut être obtenu, par exemple, par action sur un bouton de commande situé sur l'ouvrant, ou par une commande à distance, ou éventuellement par un détecteur de présence installé dans l'espace clos. D'une manière générale, ce démarrage de l'opération d'identification est prévu pour nécessiter la proximité de l'utilisateur relativement à l'espace clos où il souhaite accéder.

L'opération d'identification s'effectue sur la base d'un échange de données entre le dispositif d'identification et l'identifiant constitué, par exemple, par un badge avec transpondeur électromagnétique. Suite au déclenchement de l'opération, le dispositif d'identification, installé dans l'espace clos, émet en général un signal d'interrogation qui active l'identifiant, lequel renvoie un signal codé analysé par le dispositif d'identification. Si le signal codé correspond au code autorisé, le dispositif d'identification autorise l'accès, par exemple en déverrouillant une ou des serrures. Les signaux échangés sont généralement des signaux électromagnétiques.

Pour renforcer la sécurité, le système est conçu de telle sorte que la portée de transmission soit réduite et qu'un échange de données d'identification entre dispositif d'identification et identifiant ne peut normalement s'établir que lorsque la distance entre l'espace clos et l'identifiant est inférieure à une limite prédéterminée, par exemple de l'ordre de quelques mètres.

Malgré ces précautions, un tel système d'accès court le risque d'être piraté par un autre ensemble d'émission-réception intercalé dans la liaison entre le dispositif d'identification et l'identifiant, cet autre ensemble d'émission-réception servant en fait uniquement de répéteur.

Par exemple, deux malfaiteurs agissant de conserve pourraient obtenir l'accès à l'espace clos de la manière suivante. Un premier malfaiteur, équipé d'un système d'émission-réception installé par exemple dans une sacoche, s'approche du véhicule fermé que vient de quitter un utilisateur autorisé, tandis qu'un second malfaiteur, équipé d'un système d'émission-réception semblable à celui du premier malfaiteur, suit l'utilisateur autorisé portant l'identifiant. Lorsque l'utilisateur autorisé est suffisamment éloigné, le premier malfaiteur déclenche une opération d'identification, par exemple par appui sur un bouton de commande situé sur un ouvrant. Les signaux émis par le dispositif d'identification sont relayés par le système d'émission-réception du premier malfaiteur vers le système du second malfaiteur, qui répète les signaux du dispositif d'identification vers l'identifiant. Ce dernier va alors répondre par le code autorisé, qui est retransmis par le système répéteur jusqu'au dispositif d'identification qui commande le déverrouillage des serrures et donne accès au malfaiteur.

L'invention a pour but, surtout, de fournir un système qui permet de sécuriser une transmission bidirectionnelle de données pour l'accès à un espace clos, en empêchant une éventuelle violation par un ensemble pirate d'émission-réception tel que celui évoqué ci-dessus. Il est en outre souhaitable que le système de sécurisation soit fiable, d'une utilisation simple, pratique, et économique.

A cet effet, l'invention a pour objet un système pour sécuriser une transmission bidirectionnelle de données, pour l'accès à un espace clos, en particulier à un véhicule, comprenant un dispositif d'identification ayant un circuit d'émission et un circuit de réception, installé dans l'espace clos, et un identifiant porté par un utilisateur qui souhaite obtenir l'accès, un échange de données entre dispositif d'identification et identifiant étant prévu pour s'établir normalement lorsque la distance entre l'identifiant et le dispositif d'identification est inférieure à une limite prédéterminée, l'accès n'étant autorisé que lorsque le dispositif d'identification a authentifié l'identifiant, caractérisé par le fait que, pour empêcher un échange de données d'identification à une distance supérieure à la limite prédéterminée, en particulier par interposition d'un répéteur non autorisé, entre le dispositif d'identification et l'identifiant, le système comprend un moyen discriminateur de phase recevant à l'entrée le signal engendré par ledit circuit d'émission et le signal reçu par ledit circuit de réception en provenance de l'identifiant, un moyen de filtrage connecté en sortie dudit moyen discriminateur de phase, pour délivrer un signal continu représentatif du déphasage des signaux engendré et reçu précités, et un moyen de commande sensible à la différence entre l'amplitude dudit signal continu ainsi délivré et l'amplitude d'un signal de référence, pour maintenir l'interdiction d'accès lorsque ladite différence dépasse une valeur de seuil prédéterminée.

Ainsi, selon l'invention, s'il y a interposition d'un répéteur entre le dispositif d'identification et l'identifiant, un temps de retard sera introduit entre le signal engendré et le signal reçu, ce qui se traduira par un déphasage des deux signaux ; la détection de ce déphasage permettra de maintenir l'interdiction d'accès.

Selon une forme de réalisation particulière, le circuit de réception précité comporte une antenne reliée à un récepteur RF, par exemple à 434 MHz, connecté à une entrée du moyen discriminateur de phase précité, et le circuit d'émission précité comporte un générateur BF, par exemple à 125 KHz, connecté, d'une part, à l'autre entrée du moyen discriminateur de phase précité, et d'autre part, à un amplificateur d'antenne.

Dans ce cas, l'identifiant peut comporter un récepteur BF, avec un circuit de remise en forme du signal, et un émetteur RF modulé par le signal remis en forme.

Avantageusement, un moyen de déphasage est intercalé entre le récepteur RF du dispositif d'identification et le moyen discriminateur de phase, pour ajouter au signal reçu précité un déphasage supplémentaire de 90° à l'entrée du moyen discriminateur de phase. Ceci permet de s'affranchir de la position relative des deux antennes BF du dispositif d'identification et de l'identifiant. En effet, si l'on tourne de 180° l'antenne de réception de l'identifiant par rapport à l'antenne d'émission du dispositif d'identification, le signal reçu sera déphasé de 180° par rapport à la position précédente. En ajoutant un déphasage de 90°, le déphasage entre le signal émis et le signal reçu sera de l'ordre de 90° ou de 270°, selon les positions relatives desdites antennes, ce qui correspond à un déphasage d'environ 90°, à une période près.

De préférence, le moyen discriminateur de phase est une porte logique OU exclusif qui délivre en sortie un signal dont la composante continue varie linéairement en fonction du déphasage entre les signaux engendré et reçu précités, sur une demi-période.

Selon une autre caractéristique, le moyen de filtrage est un filtre passe-bas, par exemple avec une fréquence de coupure de l'ordre de 10 KHz.

Selon un premier mode de réalisation, le moyen de commande précité comporte un comparateur analogique pour comparer l'amplitude de la tension continue délivrée par le moyen de filtrage avec une valeur de tension de référence.

Dans une autre forme de réalisation, le moyen de commande comporte un micro-contrôleur équipé d'un convertisseur analogique/numérique, pour traiter numériquement la différence de valeur entre la tension continue délivrée et la tension de référence.

Selon encore une autre caractéristique, le générateur BF du dispositif d'identification est modulé en fréquence par l'unité de commande, de préférence de manière aléatoire, par exemple sur une plage de 120-130 KHz et avec une période d'environ 1 ms. Ainsi, le pirate ne connaîtra jamais, à un instant donné, la fréquence exacte d'émission du dispositif d'identification. Pour connaître cette fréquence, le pirate devra traiter le signal d'émission sur une période entière avant de pouvoir renvoyer le signal de l'identifiant, ce qui entraînera un temps de retard suffisant pour être mesuré. Dans ce cas, le système peut comporter un moyen de mesure du temps de retard entre les signaux engendré et reçu précités, afin que le moyen de commande précité maintienne l'interdiction d'accès lorsque la valeur du temps de retard mesuré dépasse une valeur de seuil prédéterminée, par exemple une ou deux périodes du signal.

Avantageusement, la tension de référence, à laquelle est comparée la tension continue délivrée par le moyen de filtrage, est constituée par une valeur initialement mémorisée, qui est apprise par le système.

Pour mieux faire comprendre l'objet de l'invention, on va en décrire maintenant, à titre d'exemple purement illustratif et non limitatif, un mode de réalisation représenté sur le dessin annexé.

Sur ce dessin :
- la figure 1 est un schéma synoptique fonctionnel du système selon l'invention ; et
- la figure 2 est un graphique représentant la valeur de la tension continue en fonction du déphasage.

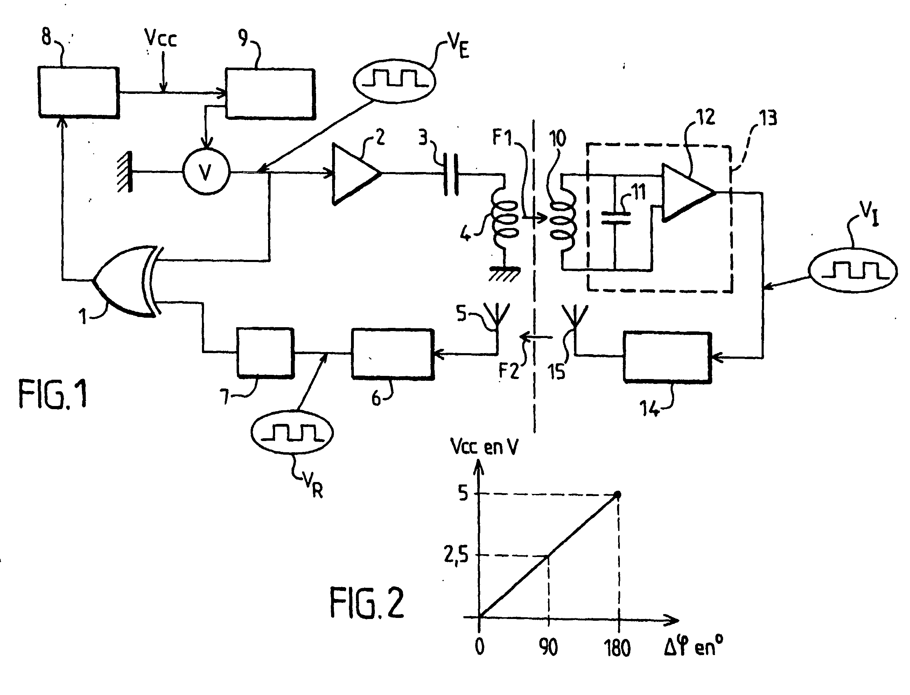

Sur la figure 1, le dispositif d'identification embarqué par exemple sur un véhicule, comporte un générateur de tension V basse fréquence BF, par exemple à 125 KHz, délivrant en sortie une tension V_{E} sous forme de créneaux. La tension V_{E} est envoyée, d'une part, à une entrée d'une porte logique OU exclusif 1 et, d'autre part, à l'entrée d'un amplificateur 2. La sortie de l'amplificateur 2 est reliée à une capacité 3 et à une inductance 4 en série, une borne de l'inductance 4 étant reliée à la masse. L'inductance 4 constitue l'antenne d'émission BF du dispositif d'identification.

Le dispositif d'identification comporte, en outre, une antenne 5 reliée à l'entrée d'un récepteur 6 radio fréquence RF, par exemple à 434 MHz. La sortie du récepteur RF 6 est reliée à une autre entrée de la porte logique 1, éventuellement par l'intermédiaire d'un moyen de déphasage 7 en série.

La porte logique 1 est reliée en sortie à un filtre passe-bas 8 d'ordre quatre, avec une fréquence de coupure d'environ 10 KHz. Le filtre 8 permet de délivrer en sortie la composante continue Vcc du signal sortant de la porte logique 1. La tension Vcc est reçue par une unité de traitement 9 comportant un micro-contrôleur équipé d'un convertisseur analogique/numérique à 8 bits. L'unité de traitement 9 est apte à commander le générateur BF précité, dont une borne est reliée à la masse.

L'identifiant, porté par exemple sur un badge, comporte une inductance 10 qui est branchée en parallèle sur une capacité 11 et aux deux bornes d'entrée d'un comparateur 12. L'ensemble 11, 12 constitue un récepteur BF 13 comportant un circuit de réveil à très faible consommation qui effectue une remise en forme du signal pour délivrer un signal induit Vₗ sous forme de créneaux. Le signal Vₗ permet de moduler un émetteur RF 14 qui délivre un signal modulé vers une antenne 15 de l'identifiant.

La flèche F1 indique la transmission du signal BF entre l'antenne 4 et l'antenne 10, et la flèche F2 indique la transmission du signal RF entre l'antenne 15 et l'antenne 5.

On va maintenant décrire un premier exemple de réalisation du système de l'invention.

Prenons pour hypothèse que le générateur V délivre une tension V_{E} avec une fréquence de 125 KHz et une amplitude de crête de 5 V. Dans ce cas, la période du signal est de 8 µs.

Le signal reçu V_{R} présente un léger déphasage par rapport au signal V_{E}, par exemple de l'ordre de quelques centaines de ns.

Dans le cas où le moyen de déphasage 7 est absent, la porte logique 1 délivrera en sortie un signal dont la fréquence sera double, c'est-à-dire de l'ordre de 250 KHz. Le filtre passe-bas 8 permettra d'éliminer la fréquence porteuse à 250 KHz, pour ne garder que la composante continue du signal.

Si les deux antennes 4, 10 sont positionnées de manière à être en phase (c'est-à-dire, avec Δϕ = 0), la tension Vcc sera de l'ordre de 0 V, comme indiqué sur le graphique de la figure 2. Si l'on tient compte du léger retard introduit par la transmission bidirectionnelle des données F1 et F2, qui est de l'ordre de quelques centaines de ns, la tension résultante Vcc sera en fait de l'ordre de quelques centaines de mV. En effet, la porte logique 1 délivre un signal dont la composante continue varie entre 0 et 5 V, pour un déphasage Δϕ compris entre 0 et 180°, comme visible sur la figure 2. On peut ainsi détecter un déphasage avec une précision de l'ordre de 5 V/180° = 28 mV/°. Etant donné que, pour le signal V_{E}, la période de 8 µs correspond à 360°, un retard de l'ordre de 100 ns, qui correspond à 0,1 µs, se traduit par un déphasage de 0,1 x 360/8 = 4,5°. Ainsi, un léger retard de l'ordre de 100 ns correspond à une tension continue Vcc égale à 4,5° x 28 mV/° = 125 mV.

A titre d'exemple, la valeur de seuil prédéterminée pourrait être de l'ordre de 250 mV, ce qui correspondrait à un retard d'environ 200 ns, alors que la valeur de la tension de référence serait de 0 V.

En revanche, si les deux bobines 4, 10 sont en opposition de phase, c'est-à-dire avec un déphasage Δϕ = 180°, la valeur de la tension continue Vcc sera de 5 V, comme visible sur la figure 2.

Par conséquent, si Vcc est par exemple compris entre 0,25 et 4,75 V, cela signifiera que les signaux émis et reçu sont déphasés d'une manière irrégulière, ce qui maintiendra l'interdiction d'accès au véhicule et/ou pourra déclencher une alarme sonore ou visuelle.

Toutefois, pour éviter d'avoir deux valeurs possibles de tension de référence, à savoir 0 V et 5 V, selon que les bobines BF sont en phase ou en opposition de phase, on peut ajouter le moyen de déphasage 7 pour introduire un déphasage supplémentaire de 90°. Ainsi, que les bobines 4, 10 soient en phase ou en opposition de phase, la porte logique 1 détectera un déphasage qui sera toujours de l'ordre de 90°, ce qui correspond à un signal Vcc de l'ordre de 2,5 V, avec une marge d'erreur de l'ordre de 10 %, c'est-à-dire 0,25 V. Le fait d'ajouter le moyen de déphasage 7 permet d'avoir en mémoire une seule valeur de tension de référence.

Ainsi, si un pirate introduit un répéteur entre le dispositif d'identification et l'identifiant, le temps de retard global pourrait, par exemple, être de l'ordre de 1 µs, ce qui correspondrait à un déphasage de 45° supplémentaires entre le signal reçu et le signal émis. La tension continue résultante Vcc varierait alors de 45° x 28 mV/° = 1,25 V, ce qui est bien supérieur à la valeur de seuil de 250 mV.

Toutefois, si un pirate vient à connaître le système selon l'invention, il pourrait chercher à augmenter le déphasage, pour le porter, par exemple, de 45° à 180°, ce qui rendrait l'utilisation du répéteur transparent pour le système. Autrement dit, le pirate pourrait, de manière artificielle, augmenter le temps de retard du signal reçu, de façon que le signal reçu soit toujours en phase ou en opposition de phase avec le signal émis.

Pour éviter cet inconvénient, il suffit de faire varier, de manière aléatoire, la fréquence du signal engendré, par exemple sur une plage allant de 120 à 130 KHz, avec une variation de la fréquence, par exemple toutes les millisecondes.

Par exemple, si le pirate pense que la fréquence d'émission est de 125 KHz, il pourra chercher à renvoyer le signal avec un temps de retard de l'ordre de 8 µs. Si, toutefois, le signal d'émission a en fait, à cet instant précis, une fréquence de 120 KHz, ce qui correspond à une période de 8,33 µs, le signal reçu sera déphasé par rapport au signal émis avec un temps de retard de 0,33 µs, ce qui correspondra à un déphasage d'environ 14° et donc à une variation de la tension continue Vc de l'ordre de 0,4 V, ce qui est bien supérieur à la valeur de seuil de 250 mV .

Si le pirate sait que la fréquence d'émission peut varier, il pourrait, tout d'abord, analyser le signal émis par le dispositif d'identification sur une période complète, afin d'identifier sa fréquence, puis renvoyer le signal vers le dispositif d'identification, avec un retard global de deux ou plus périodes, ce qui rendrait à nouveau le piratage transparent vis-à-vis du système.

Pour éviter ce cas, il suffirait alors de rajouter un moyen de mesure du temps de retard entre le signal émis et le signal reçu. En effet, dès lors qu'il sera nécessaire au pirate de mesurer d'abord la fréquence du signal émis sur une période, puis de le renvoyer après au moins deux périodes, le temps de retard résultant sera suffisamment grand pour pouvoir être détecté par un moyen de mesure de temps de retard suffisamment simple et économique.

Enfin, il est à noter que si l'on utilise un convertisseur analogique/numérique à 8 bits, on pourra obtenir une numérisation du signal Vcc avec une précision de 5 V/256, c'est-à-dire environ 19,5 mV/bit. Etant donné que la porte logique 1 permettait d'avoir une précision de 27 mV/°, on obtient avec le convertisseur analogique/numérique une précision supérieure à 1 ° par bit.

Bien que l'invention ait été décrite en liaison avec plusieurs exemples de réalisation particuliers, il est bien évident qu'elle n'y ait nullement limitée.

## Revendications

1. Système pour sécuriser une transmission bidirectionnelle de données, pour l'accès à un espace clos, en particulier à un véhicule, comprenant un dispositif d'identification ayant un circuit d'émission (V, 2-4) et un circuit de réception (5, 6), installé dans l'espace clos, et un identifiant (10-15) porté par un utilisateur qui souhaite obtenir l'accès, un échange de données entre dispositif d'identification et identifiant étant prévu pour s'établir normalement lorsque la distance entre l'identifiant et le dispositif d'identification est inférieure à une limite prédéterminée, l'accès n'étant autorisé que lorsque le dispositif d'identification a authentifié l'identifiant, **caractérisé par le fait que**, pour empêcher un échange de données d'identification à une distance supérieure à la limite prédéterminée, en particulier par interposition d'un répéteur non autorisé, entre le dispositif d'identification et l'identifiant, le système comprend un moyen discriminateur de phase (1) recevant à l'entrée le signal engendré (V_{E}) par ledit circuit d'émission et le signal (V_{R}) reçu par ledit circuit de réception en provenance de l'identifiant, un moyen de filtrage (8) connecté en sortie dudit moyen discriminateur de phase, pour délivrer un signal continu (Vcc) représentatif du déphasage des signaux engendré et reçu précités, et un moyen de commande (9) sensible à la différence entre l'amplitude dudit signal continu ainsi délivré et l'amplitude d'un signal de référence, pour maintenir l'interdiction d'accès lorsque ladite différence dépasse une valeur de seuil prédéterminée.

2. Système selon la revendication 1, **caractérisé par le fait que** le circuit de réception précité comporte une antenne (5) reliée à un récepteur RF (6), par exemple à 434 MHz, connecté à une entrée du moyen discriminateur de phase (1) précité, et le circuit d'émission précité comporte un générateur BF (V), par exemple à 125 KHz, connecté, d'une part, à l'autre entrée du moyen discriminateur de phase précité, et d'autre part, à un amplificateur d'antenne (2).

3. Système selon la revendication 2, **caractérisé par le fait que** l'identifiant comporte un récepteur BF (13), avec un circuit de remise en forme du signal, et un émetteur RF (14) modulé par le signal remis en forme.

4. Système selon l'une des revendications 1 à 3, **caractérisé par le fait qu'**un moyen de déphasage (7) est intercalé entre le récepteur RF (6) du dispositif d'identification et le moyen discriminateur de phase (1), pour ajouter au signal reçu (V_{R}) précité un déphasage supplémentaire de 90° à l'entrée du moyen discriminateur de phase.

5. Système selon l'une des revendications 1 à 4, **caractérisé par le fait que** le moyen discriminateur de phase (1) est une porte logique OU exclusif qui délivre en sortie un signal dont la composante continue (Vcc) varie linéairement en fonction du déphasage entre les signaux engendré (V_{E}) et reçu (V_{R}) précités, sur une demi-période.

6. Système selon la revendication 5, **caractérisé par le fait que** le moyen de filtrage (8) est un filtre passe-bas, par exemple avec une fréquence de coupure de l'ordre de 10 KHz.

7. Système selon l'une des revendications 1 à 6, **caractérisé par** le fait le moyen de commande précité comporte un comparateur analogique pour comparer l'amplitude de la tension continue délivrée (Vcc) par le moyen de filtrage (8) avec une valeur de tension de référence.

8. Système selon l'une des revendications 1 à 6, **caractérisé par le fait que** le moyen de commande comporte un micro-contrôleur (9) équipé d'un convertisseur analogique/numérique, pour traiter numériquement la différence de valeur entre la tension continue délivrée et la tension de référence.

9. Système selon la revendication 8, **caractérisé par le fait que** le générateur BF (V) du dispositif d'identification est modulé en fréquence par l'unité de commande (9), de préférence de manière aléatoire, par exemple sur une plage de 120-130 KHz et avec une période d'environ 1 ms.

10. Système selon la revendication 9, **caractérisé par le fait qu'**il comporte un moyen de mesure du temps de retard entre les signaux engendré (V_{E}) et reçu (V_{R}) précités, afin que le moyen de commande précité maintienne l'interdiction d'accès lorsque la valeur du temps de retard mesuré dépasse une valeur de seuil prédéterminée, par exemple une ou deux périodes du signal.

11. Système selon l'une des revendications 1 à 10, **caractérisé par** le fait la tension de référence, à laquelle est comparée la tension (Vcc) continue délivrée par le moyen de filtrage (8), est constituée par une valeur initialement mémorisée, qui est apprise par le système.

## Claims

1. System for ensuring the security of bidirectional data transmission for access to a closed space, in particular to a vehicle, comprising an identification device having a transmitting circuit (V, 2-4) and a receiving circuit (5, 6) installed in the closed space and an identifier (10-15) carried by a user wishing to obtain access, data exchange between the identification device and the identifier normally taking place when the distance between the identifier and the identification device is less than a predetermined limit, access only being authorised when the identification device has authenticated the identifier, **characterised in that**, in order to prevent the exchange of identification data at a distance greater than the predetermined limit, in particular, by the interposition of an unauthorised repeater between the identification device and the identifier, the system comprises a phase discriminator means (1) receiving at its input the signal (V_{E}) generated by the said transmitting circuit and the signal (V_{R}) received by the said receiving circuit originating from the identifier, a filter means (8) connected at the output of the said phase discriminator means in order to deliver a continuous signal (Vcc) representative of the phase displacement of the aforesaid signals generated and received, and a control means (9) sensitive to the difference between the amplitude of the said continuous signal delivered in this manner and the amplitude of a reference signal in order to maintain the barring of access when the said difference exceeds a predetermined threshold value.

2. System according to claim 1, **characterised in that** the aforesaid receiving circuit comprises an aerial (5) connected to an RF receiver (6), e.g. at 434 MHz, connected to an input of the aforesaid phase discriminator means (1) and the aforesaid transmitting circuit comprises an LF generator (V), e.g. at 125 KHz, connected, on the one hand, to the other input of the aforesaid phase discriminator means and, on the other hand, to an aerial amplifier (2).

3. System according to claim 2, **characterised in that** the identifier comprises an LF receiver (13) with a signal reshaping circuit and an RF transmitter (14) modulated by the reshaped signal.

4. System according to one of claims 1 to 3, **characterised in that** a phase displacement means (7) is inserted between the RF receiver (6) of the identification device and the phase discriminator means (1) in order to add to the aforesaid signal received (V_{R}) supplementary phase displacement of 90° at the input of the phase discriminator means.

5. System according to one of claims 1 to 4, **characterised in that** the phase discriminator means (1) is an exclusive OR gate which delivers at its output a signal the continuous component (Vcc) of which varies linearly as a function of the phase displacement between the aforesaid signals generated (V_{E}) and received (V_{R}) over a half-cycle.

6. System according to claim 5, **characterised in that** the filter means (8) is a lowpass filter, e.g. with a cut-off frequency of the order of 10 KHz.

7. System according to one of claims 1 to 6, **characterised in that** the aforesaid control means comprises an analog comparator in order to compare the amplitude of the continuous voltage (Vcc) delivered by the filter means (8) with a reference voltage value.

8. System according to one of claims 1 to 6, **characterised in that** the control means comprises a microcontroller (9) provided with a analog-to-digital converter in order to digitally process the difference in value between the continuous voltage delivered and the reference voltage.

9. System according to claim 8, **characterised in that** the frequency of the LF generator (V) of the identification device is modulated by the control unit (9), preferably in a random manner, e.g. over a range of 120-130 KHz and with a cycle of approximately 1 ms.

10. System according to claim 9, **characterised in that** it comprises a means for measuring the delay time between the aforesaid signals generated (V_{E}) and received (V_{R}) so that the aforesaid control means maintains the barring of access when the value of the delay time measured exceeds a predetermined threshold value, e.g. one or two cycles of the signal.

11. System according to one of claims 1 to 10, **characterised in that** the reference voltage with which the continuous voltage (Vcc) delivered by the filter means (8) is compared is formed by an initially stored value ascertained by the system.

## Patentansprüche

1. System zur Absicherung einer bidirektionalen Datenübertragung für den Zugang zu einem abgeschlossenen Raum, insbesondere zu einem Fahrzeug, enthaltend eine Identifikationsvorrichtung mit Sendeschaltung (V, 2 - 4) und Empfangsschaltung (5, 6), die im abgeschlossenen Raum installiert ist, und einen vom Zugang wünschenden Benutzer mitgeführten Identifizierer (10 - 15), wobei ein Datenaustausch zwischen Identifikationsvorrichtung und Identifizierer vorgesehen ist, der normalerweise dann stattfindet, wenn die Entfernung zwischen Identifizierer und Identifikationsvorrichtung geringer ist als ein vorbestimmter Grenzwert, wobei der Zugang nur dann gestattet ist, wenn die Identifikationsvorrichtung den Identifizierer authentifiziert hat, **dadurch gekennzeichnet, dass** zum Verhindern eines Identifikationsdatenaustauschs in einer Entfernung, die größer ist als der vorbestimmte Grenzwert, insbesondere durch Zwischenschaltung eines nicht autorisierten Abfangsenders zwischen Identifikationsvorrichtung und Identifizierer, das System einen Phasendiskriminator (1) enthält, der am Eingang das von der genannten Sendeschaltung erzeugte Signal (V_{E}) und das von der genannten Empfangsschaltung durch den Identifizierer empfangene Signal (V_{R}) empfängt, sowie ein Filtermittel (8), das am Ausgang des genannten Phasendiskriminators angeschlossen ist, um ein Gleichspannungssignal (Vcc) auszugeben, das die Phasenverschiebung des vorgenannten erzeugten und empfangenen Signals darstellt, und ein Steuermittel (9), das für die Differenz zwischen der Amplitude des so ausgegebenen kontinuierlichen Signals und der Amplitude eines Bezugssignals empfindlich ist, um die Zugangsunterbindung aufrechtzuerhalten, wenn die genannte Differenz einen vorbestimmten Schwellenwert übersteigt.

2. System nach Anspruch 1, **dadurch gekennzeichnet, dass** die vorgenannte Empfangsschaltung eine Antenne (5) enthält, die mit einem HF-Empfänger (6) von beispielsweise 434 MHz verbunden ist, der an einen Eingang des vorgenannten Phasendiskriminators (1) angeschlossen ist, und dass die vorgenannte Sendeschaltung einen NF-Generator (V) von beispielsweise 125 KHz enthält, der einerseits an den weiteren Eingang des vorgenannten Phasendiskriminators und andererseits an einen Antennenverstärker (2) angeschlossen ist.

3. System nach Anspruch 2, **dadurch gekennzeichnet, dass** der Identifizierer einen NF-Empfänger (13) mit einem Signalaufbereitungskreis und einen HF-Sender (14) enthält, der durch das aufbereitete Signal moduliert wird.

4. System nach einem der Ansprüche 1 bis 3, **dadurch gekennzeichnet, dass** ein Phasenverschiebungsmittel (7) zwischen HF-Empfänger (6) der Identifikationsvorrichtung und Phasendiskriminator (1) zwischengeschaltet ist, um dem empfangenen Signal (V_{R}) eine zusätzliche Phasenverschiebung von 90° am Eingang des Phasendiskriminators aufzuprägen.

5. System nach einem der Ansprüche 1 bis 4, **dadurch gekennzeichnet, dass** der Phasendiskriminator (1) ein EXCLUSIVE-OR-Gate ist, das am Ausgang ein Signal ausgibt, dessen Gleichspannungskomponente (Vcc) linear in Abhängigkeit von der Phasenverschiebung zwischen dem erzeugten Signal (V_{E}) und dem empfangenen Signal (V_{R}) über eine Halbperiode variiert.

6. System nach Anspruch 5, **dadurch gekennzeichnet, dass** das Filtermittel (9) ein Tiefpassfilter ist, beispielsweise mit einer Grenzfrequenz im Bereich von 10 KHz.

7. System nach einem der Ansprüche 1 bis 6, **dadurch gekennzeichnet, dass** das vorgenannte Steuermittel einen Analog-Komparator enthält, um die Amplitude der vom Filtermittel (8) abgegebenen Gleichspannung (Vcc) mit einem Spannungsbezugswert zu vergleichen.

8. System nach einem der Ansprüche 1 bis 6, **dadurch gekennzeichnet, dass** das Steuermittel einen Mikrokontroller (9) enthält, der mit einem AD-Wandler ausgestattet ist, um den Differenzwert zwischen ausgegebener Gleichspannung und Bezugsspannung digital zu verarbeiten.

9. System nach Anspruch 8, **dadurch gekennzeichnet, dass** der NF-Generator (V) der Identifikationsvorrichtung von der Steuereinheit (9) vorzugsweise zufallsbedingt beispielsweise in einem Bereich von 120 - 130 KHz und mit einer Periode von etwa 1 ms frequenzmoduliert wird.

10. System nach Anspruch 9, **dadurch gekennzeichnet, dass** es ein Mittel zum Messen der Verzögerungszeit zwischen dem erzeugten Signal (V_{E}) und dem empfangenen Signal (V_{R}) enthält, damit das vorgenannte Steuermittel die Zugangsunterbindung aufrecht hält, wenn der Wert der gemessenen Verzögerungszeit einen vorbestimmten Schwellenwert von beispielsweise einer oder zwei Signalperioden übersteigt.

11. System nach einem der Ansprüche 1 bis 10, **dadurch gekennzeichnet, dass** die Bezugsspannung, mit der die vom Filtermittel (8) ausgegebene Gleichspannung (Vcc) verglichen wird, aus einem anfänglich abgespeicherten Wert besteht, der vom System erlernt wurde.
